# FASCICULE DE BREVET EUROPEEN

(11) **EP 3 631 246 B1**
(45) Date de publication et mention de la délivrance du brevet: **28.04.2021**
(21) Numéro de dépôt: 18735650.6
(22) Date de dépôt: 25.05.2018
(51) Int. Cl.: F16H 57/039, F16H 57/12, F16H 57/022, F16H 57/021

(54) **BOUCHON D'ÉTANCHÉITÉ POUR CARTER DE RÉDUCTEUR PORTANT UN CHARIOT DE COMPENSATION DE JEU D'ENGRÈNEMENT**
VERSCHLUSSSTOPFEN FÜR EIN UNTERSETZUNGSGETRIEBEGEHÄUSE MIT EINEM VERZAHNUNGSSPIELAUSGLEICHSSCHLITTEN
SEALING PLUG FOR A REDUCER CASING, BEARING A MESHING PLAY-COMPENSATING CARRIAGE

(30) Priorité: 31.05.2017 FR 1754827
(43) Date de publication de la demande: 08.04.2020
(73) Titulaire: JTEKT Europe, 69540 Irigny (FR)
(72) Inventeur: GUERIN, Mickael, 69126 Brindas (FR)
(74) Mandataire: Chevalier, Renaud Philippe
(86) Numéro de dépôt international: PCT/FR2018/051232
(87) Numéro de publication internationale: WO 2018/220317

(56) Documents cités:
- EP-A1- 2 492 167
- EP-A1- 2 754 600
- EP-A1- 3 095 672
- FR-A1- 2 974 833

## Description

La présente invention concerne l'agencement des carters destinés à protéger des mécanismes, et notamment des mécanismes à engrenages, tels que des réducteurs à engrenage, et plus particulièrement des réducteurs à engrenage destinés à des systèmes de direction assistée pour des véhicules.

De tels carters comprennent généralement un ou plusieurs orifices d'accès, qui traversent la paroi dudit carter pour permettre l'introduction et l'assemblage de tout ou partie du mécanisme dans le carter.

Ces orifices d'accès doivent être obturés au moyen de bouchons, de manière à empêcher l'intrusion d'eau ou de corps étrangers dans le carter, ou la perte de lubrifiant, et ainsi garantir durablement le bon fonctionnement du mécanisme protégé par le carter.

Il est par ailleurs également connu de prévoir, au sein des mécanismes à engrenage, un dispositif de compensation de jeu d'engrènement (« anti-backlash system ») qui presse les dentures des éléments d'engrenage les unes contre les autres.

Un exemple de ce type de bouchon est connu du document EP 2 492 167 A1.

Les dispositifs de compensation de jeu d'engrènement connus limitent de manière efficace les bruits d'engrènement, et sont aptes à compenser aussi bien l'usure du mécanisme que les effets des variations de température ou d'hygrométrie.

En revanche, les dispositifs de compensation de jeu connus présentent parfois une certaine complexité, et peuvent à ce titre comporter un nombre élevé de pièces et/ou requérir des usinages complexes du carter, ce qui tend à compliquer les opérations de fabrication et d'assemblage, et à augmenter le coût de mise en œuvre de tels dispositifs.

En outre, il est indispensable de bien dissocier mécaniquement le bouchon, qui doit rester en position fixe et étanche sur le carter, du mécanisme de compensation de jeu, qui comporte nécessairement des pièces qui sont montées mobiles par rapport au carter, et qui ne doivent pas interférer avec ledit bouchon pour éviter tout risque de défaillance, notamment tout risque de coincement desdites pièces mobiles ou d'expulsion accidentelle du bouchon.

Bien entendu, ici encore, une telle exigence tend à augmenter l'encombrement global du carter, et à compliquer les opérations d'assemblage, au détriment du coût de fabrication.

Les objets assignés à l'invention visent par conséquent à remédier aux inconvénients susmentionnés, et à proposer un nouvel agencement de carter dont l'assemblage soit simple et rapide et qui permette de concilier de façon compacte et à moindre coût les fonctions d'étanchéité et de compensation de jeu d'engrènement.

Les objets assignés à l'invention sont atteints au moyen d'un bouchon destiné à fermer un orifice d'un carter, ledit bouchon comprenant un moyeu plein, d'axe central (XX'), agencé pour obstruer l'orifice du carter, ainsi qu'un organe de retenue solidaire du moyeu et agencé pour coopérer avec le carter afin d'assurer la fixation axiale du bouchon dans l'orifice du carter, ledit bouchon étant caractérisé en ce qu'il comporte :
- un chariot de rattrapage de jeu, qui est distinct du moyeu et qui est monté mobile sur un support de guidage porté par le moyeu, ledit support de guidage étant agencé de manière à retenir axialement ledit chariot et à guider le déplacement relatif dudit chariot par rapport au moyeu selon une direction dite « direction de rattrapage de jeu » (ZZ') transverse à l'axe central (XX'),
- un organe élastique, de type ressort, interposé entre le support de guidage et le chariot de manière à contraindre élastiquement ledit chariot en déplacement selon la direction de rattrapage de jeu (ZZ'),
- un organe d'orientation agencé pour pouvoir coopérer avec un organe d'orientation conjugué prévu dans le carter, de manière à orienter le bouchon, et par conséquent la direction de rattrapage de jeu définie par le support de guidage, en azimut autour de l'axe central (XX'), selon une orientation prédéterminée par rapport au carter.

Avantageusement, l'invention permet de combiner, au sein d'un même sous-ensemble formant bouchon, un moyeu qui assure l'obturation étanche du carter, un chariot mobile et contraint élastiquement qui assure le rattrapage de jeu d'engrènement du mécanisme contenu dans le carter, et un organe d'orientation qui forme un détrompeur permettant de définir immédiatement, lors de l'assemblage du bouchon sur le carter, l'orientation appropriée de la direction de rattrapage de jeu selon laquelle doit se déplacer le chariot.

Ainsi, on regroupe, au sein d'un même sous-ensemble compact, facile et rapide à monter en une seule opération sur le carter, toutes les fonctions utiles à l'obturation étanche et au rattrapage de jeu.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
La figure 1 et la figure 2 illustrent, en vue éclatée en perspective respectivement de dessus et de dessous, la mise en œuvre d'un bouchon selon l'invention au sein d'un carter abritant un mécanisme de réducteur à roue tangente et vis sans fin.
La figure 3 est une vue assemblée, en coupe longitudinale vue de côté, du dispositif des figures 1 et 2.
La figure 4 est une vue en coupe longitudinale vue du dessous du dispositif de la figure 3.
La figure 5 illustre une variante de bouchon selon l'invention comprenant un moyeu qui est formé par l'assemblage de deux éléments de bouchon emboîtés.
La figure 6 est une vue en perspective d'une portion de carter faisant apparaître un aménagement d'orifice propre à accueillir un bouchon selon l'invention.
Les figures 7 et 8 illustrent, selon des vues en perspective de face et de dos, un élément de bouchon de la figure 5 pourvu d'un support de guidage.

L'invention concerne un bouchon 1 destiné à fermer un orifice 2 d'un carter 3.

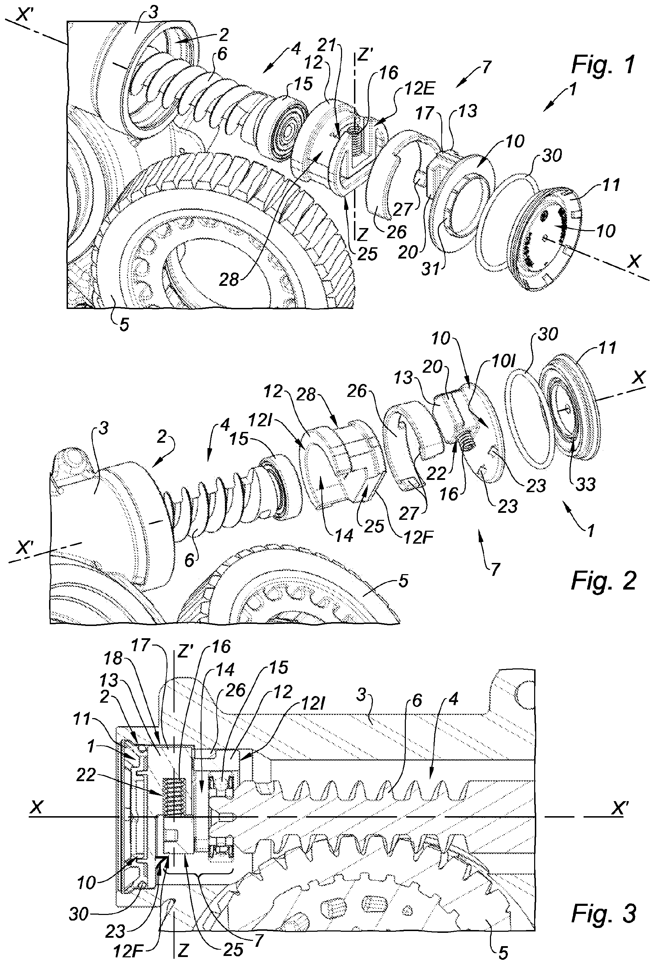

Le carter 3 peut être métallique ou en matière plastique rigide, et abrite un mécanisme 4 à engrenage, tel que cela est notamment visible sur les figures 1 à 3.

Le mécanisme 4 est de préférence un réducteur, par exemple un réducteur à roue tangente 5 et vis sans fin 6.

Selon une variante d'application préférentielle, le mécanisme 4 fait partie d'un système de direction assistée pour un véhicule.

Plus particulièrement, le mécanisme 4 peut former un réducteur qui assure une transmission mécanique entre un moteur d'assistance de direction et un organe mobile, tel qu'une crémaillère ou une colonne de direction, qui permet de modifier l'orientation en lacet (angle de braquage) des roues directrices d'un véhicule.

Le carter 3 contient également un dispositif 7 de rattrapage de jeu d'engrènement, qui vient presser radialement, et de manière élastique, les dentures de l'engrenage l'une contre l'autre, ici qui vient presser la denture de la vis sans fin 6 contre la denture de la roue 5, de sorte à supprimer les jeux d'engrènements, et ainsi atténuer les bruits de fonctionnement, les chocs et les vibrations dans le mécanisme 4.

Le bouchon 1 comprend un moyeu 10 plein, d'axe central (XX'), agencé pour obstruer l'orifice 2 du carter.

Le bouchon 1 comprend également un organe de retenue 11 qui est solidaire du moyeu 10 et agencé pour coopérer avec le carter 3 afin d'assurer la fixation axiale du bouchon dans l'orifice 2 du carter.

De préférence, l'organe de retenue 11 est une collerette qui coopère par encliquetage avec une gorge creusée dans la paroi de l'orifice 2.

On peut ainsi fixer facilement le bouchon 1 au carter 3.

En outre, une telle solution permet d'enfoncer le bouchon 1 dans l'orifice 2, en retrait de la surface apparente du carter 3, ce qui met le bouchon à l'abri des dégradations ou d'un arrachement accidentel.

Ceci étant, on pourrait fixer le bouchon 1 au carter 3 par tout autre moyen de fixation approprié, par exemple par une ou des vis de fixation qui maintiendraient l'organe de retenue 11 contre le carter 3, sans sortir du cadre de l'invention.

Selon l'invention, le bouchon 1 comporte un chariot 12 de rattrapage de jeu, distinct du moyeu 10 et qui est monté mobile sur un support de guidage 13 porté par le moyeu 10.

L'invention permet ainsi de réunir au sein d'un même bouchon 1 des organes d'obturation étanche et des organes de rattrapage de jeu.

Ledit support de guidage 13 est agencé de manière à retenir axialement ledit chariot 12, afin de rendre le chariot 12 captif du moyeu 10 selon la direction de l'axe central (XX').

Le support de guidage 13 empêche ainsi ledit chariot 12 de se détacher du moyeu 10, et donc du bouchon 1, lorsque le bouchon 1 est en place dans le carter 3, et lors du fonctionnement du mécanisme 4.

Ledit support de guidage 13 est également agencé de manière à guider le déplacement relatif du chariot 12 par rapport au moyeu selon une direction dite « direction de rattrapage de jeu » (ZZ') transverse à l'axe central (XX').

Plus préférentiellement, ledit support de guidage 13 guide le chariot 12 en translation rectiligne, et de préférence exclusivement en translation rectiligne, selon ladite direction de rattrapage de jeu (ZZ').

Ladite direction de rattrapage de jeu (ZZ') est de préférence sensiblement perpendiculaire à l'axe central (XX'), c'est-à-dire forme avec ledit axe central (XX') un angle égal à 90 degrés à +/- 3 degrés voire à +/- 5 degrés.

Cette direction correspond à la direction du rattrapage de jeu d'engrènement, selon laquelle on modifie la position et/ou l'entraxe des éléments dentés du mécanisme à engrenage 4, ici plus particulièrement l'entraxe entre la roue tangente 5 et la vis sans fin 6.

Plus préférentiellement, on placera le bouchon 1 de manière à ce que l'axe central (XX') coïncide avec l'axe nominal de rotation de la vis sans fin 6, de telle sorte que le chariot 12 pourra accommoder dynamiquement, en se déplaçant par rapport au moyeu 10 fixe selon la direction de rattrapage de jeu (ZZ'), les composantes de débattement radiales, c'est-à-dire perpendiculaires à l'axe central (XX'), de la vis sans fin 6.

Dans ce qui suit, on considérera par commodité de description que le bouchon 1 est coaxial à la vis sans fin 6, et l'on fera référence à un axe central (XX') commun.

Par « axiale », on désignera une direction parallèle voire confondue avec l'axe considéré (par défaut, l'axe central (XX')), et par « radiale » une direction perpendiculaire audit axe considéré.

De préférence, tel que cela est visible sur les figures 2, 3 et 4, le chariot comporte un logement de palier 14 qui est agencé pour accueillir un palier 15, tel qu'un roulement à billes, qui supporte la vis sans fin 6, de préférence une extrémité de la vis sans fin 6, en rotation autour de l'axe central (XX').

De façon particulièrement préférentielle, le palier 15 est monté de sorte à être solidaire du chariot 12.

Selon l'invention, le bouchon comporte également un organe élastique 16, de type ressort, et plus préférentiellement de type ressort hélicoïdal, qui est interposé entre le support de guidage 13 et le chariot 12 de manière à contraindre élastiquement ledit chariot 12 en déplacement selon la direction de rattrapage de jeu (ZZ').

Le sens d'action de l'organe élastique 16 est choisi de manière à ce que l'effort de rappel développé par ledit organe élastique 16 à l'encontre du chariot 12 tende à pousser le chariot 12, et par conséquent le palier 15 et la vis sans fin 6, vers et contre la roue tangente 5.

Ainsi, le chariot 12 assure une suspension élastique qui compense les variations de position radiale de la vis sans fin 6, par rapport au carter 3 et par rapport au moyeu 10 fixe.

Le dispositif de rattrapage de jeu 7 comprend ainsi, en définitive, au moins le chariot 12 monté mobile sur le moyeu 10 et l'organe élastique 16.

Selon l'invention, le bouchon 1 comporte en outre un organe d'orientation 17 agencé pour pouvoir coopérer avec un organe d'orientation conjugué 18 prévu dans le carter 3, de manière à orienter le bouchon 1, et plus particulièrement le moyeu 10 et le support de guidage 13, et par conséquent la direction de rattrapage de jeu (ZZ') définie par le support de guidage 13, en azimut autour de l'axe central (XX'), selon une orientation prédéterminée par rapport au carter 3.

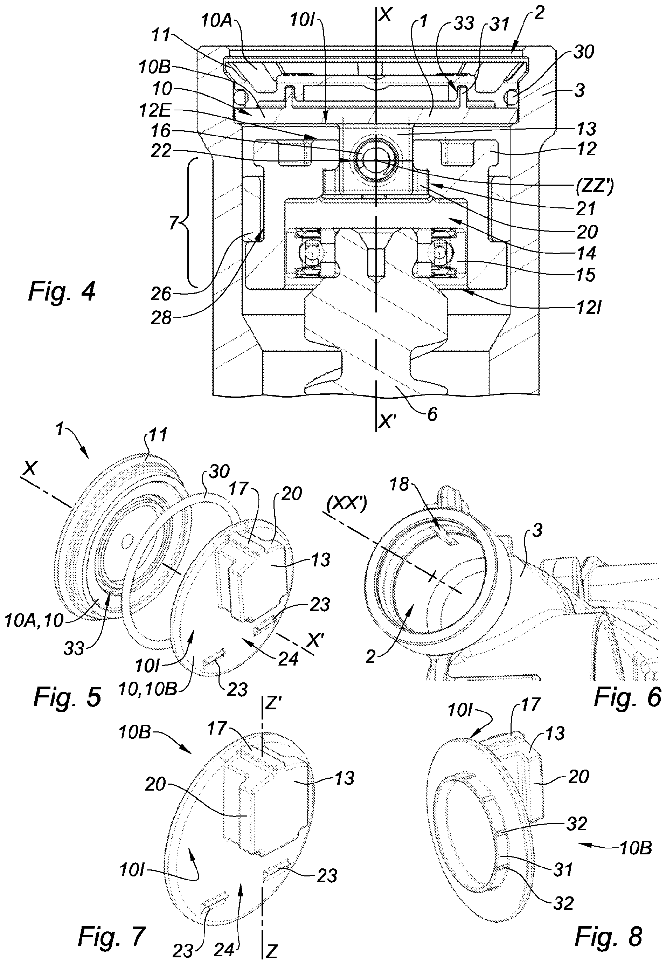

De préférence, l'organe d'orientation 17 du bouchon 1 prendra la forme d'une protubérance radiale mâle, telle qu'une nervure parallèle à l'axe central (XX'), et qui viendra coopérer avec un organe d'orientation conjugué 18 formé par une dépression femelle, telle qu'une rainure axiale, creusée dans la surface interne de la paroi de l'orifice 2, tel que cela est illustré sur la figure 6.

Un tel organe d'orientation 17 forme ainsi un détrompeur qui permet d'indexer la direction de rattrapage de jeu (ZZ') matérialisée par le support de guidage 13, et qui permet par conséquent de positionner convenablement le bouchon 1, et donc le dispositif de rattrapage de jeu 7, dès l'engagement du bouchon 1 dans l'orifice 2.

Avantageusement, l'invention permet donc en définitive d'embarquer un dispositif de rattrapage de jeu 7 directement sur le bouchon 1, en un même sous-ensemble unitaire et compact, qui peut avantageusement être manipulé d'un seul bloc et engagé dans son ensemble, par approche axiale selon l'axe central (XX'), dans l'orifice 2 du carter 3 et sur la vis sans fin 6, et plus particulièrement sur le palier 15 déjà monté sur la vis sans fin 6 et donc déjà présent dans le carter 3.

L'invention simplifie donc la mise en place simultanée de l'ensemble des fonctions d'obturation étanche et de rattrapage de jeu, par simple mise en place d'un bouchon 1 formant un sous-ensemble mécanique qui réunit toutes ces fonctions (obturation étanche, rattrapage de jeu, orientation du rattrapage de jeu).

De préférence, le support de guidage 13 est formé d'un seul tenant, avec le moyeu 10.

Ceci permet une fabrication simple et rapide, et une fixation solide du support de guidage 13 sur le moyeu 10.

Plus préférentiellement, le moyeu 10 et de support de guidage 13 seront formés d'un seul tenant par moulage, par exemple par moulage par injection, de préférence en matériau thermoplastique, à la fois léger et résistant à corrosion.

Ledit matériau thermoplastique pourra notamment être choisi parmi le poly-téréphtalate de butylène (PBT), le polyamide (PA66), le polyphtalamide (PPA66).

On pourra avantageusement incorporer dans ledit matériau des fibres de renfort, par exemple des fibres de verre, de préférence en quantité de 30% à 50% en poids.

De préférence, le support de guidage 13 forme, et de préférence est formé par, une excroissance mâle 20 qui fait saillie axialement sur une face du moyeu dite « face interne » 10I.

Ladite face interne 10I forme une base dudit moyeu, de préférence sensiblement perpendiculaire à l'axe central (XX'), et qui est destinée à être orientée axialement vers l'intérieur du carter 3, ici, donc, vers la vis sans fin 6.

Tel que cela est bien visible sur les figures 1, 2, 4, 5, 7 et 8, ladite excroissance mâle 20 présente, en section droite normale à la direction de rattrapage de jeu (ZZ'), une forme de crochet.

Ladite forme de crochet se présente de préférence en queue d'aronde ou, tel que cela est illustré sur les figures susmentionnées, en « T ».

Cette excroissance mâle 20 en crochet coopère avec une rainure femelle 21 de forme conjuguée creusée dans le chariot 12, pour guider le chariot 12 en translation selon la direction de rattrapage de jeu (ZZ').

La forme en crochet de l'excroissance mâle 20 assure avantageusement la retenue axiale du chariot 12 sur le moyeu 10.

Ladite forme en crochet forme en outre une sorte de rail qui offre un guidage coulissant robuste et précis du chariot 12.

De préférence, l'organe d'orientation 17 est formé d'un seul tenant avec le moyeu 10 et/ou d'un seul tenant avec le support guidage 13, de préférence sous forme d'une nervure axiale.

Pour faciliter la fabrication du bouchon 1 ainsi que la sélection de l'orientation du moyeu 10 dans le carter 3, ledit organe d'orientation 17 est de préférence situé dans le prolongement de la direction de rattrapage de jeu (ZZ'), qui coïncide de préférence avec l'axe principal du ressort hélicoïdal 16 et avec la direction longitudinale de l'excroissance mâle 20.

Plus préférentiellement, l'organe d'orientation 17 sera formé en saillie radiale centrifuge sur la face arrière du support de guidage 13, à l'opposé du chariot 12 et de la vis sans fin 6.

De préférence, tel que cela est notamment visible sur les figures 2, 3 et 4, le support de guidage 13 présente un trou de réception 22, percé selon la direction de rattrapage de jeu (ZZ'), pour accueillir l'organe élastique 16.

Comme indiqué ci-dessus, ledit organe élastique 16 est de préférence formé par un ressort hélicoïdal 16, ici engagé coaxialement dans ledit trou de réception 22.

On peut ainsi loger l'organe élastique 16 de manière stable et dans un espace restreint.

En outre, en centrant sensiblement le trou de réception 22, et donc l'action de l'organe élastique 16 par rapport aux surfaces de guidage (surfaces d'appui) que le support de guidage 13 offre au chariot 12, et plus particulièrement offre à la rainure de guidage femelle 21, on équilibre l'effort de rattrapage de jeu exercé par l'organe élastique 16, ce qui permet notamment d'éviter un basculement ou un coincement du chariot 12 contre le support de guidage 13.

Selon une caractéristique préférentielle qui peut constituer une invention à part entière, en particulier indépendamment de la présence ou non d'un organe d'orientation 17 sur le bouchon 1, le moyeu 10 présente une face interne 10I, destinée à être orientée axialement vers l'intérieur du carter 3, ici vers la vis sans fin 6, et située en vis-à-vis du chariot 12, et ladite face interne 10I est pourvue d'au moins un ergot 23, et de préférence deux ergots 23, destinés à retenir le chariot 12 sur le support de guidage 13, afin d'empêcher un déboîtement accidentel du chariot 12 hors du support de guidage 13 selon la direction de rattrapage de jeu (ZZ') lors de la manipulation du bouchon 1 hors du carter 3 et/ou lors du montage du bouchon 1 sur le carter 3.

La présence de tels ergots 23 facilite donc le transport et le montage du sous-ensemble moyeu 10/chariot 12 qui est préconstitué avant son insertion dans l'orifice 2 du carter 3.

Comme cela est bien visible sur la figure 7, les ergots 23 font saillie axialement, selon la direction de l'axe central (XX'), sur la face interne 10I du moyeu, de sorte à former des butées sur la trajectoire du chariot 12, qui correspond à la direction de rattrapage de jeu (ZZ').

Lesdits ergots 23 sont situés à distance du support de guidage 13, et plus particulièrement à distance de l'excroissance mâle 20, selon la direction de rattrapage de jeu (ZZ').

Lesdits ergots 23 sont suffisamment éloignés axialement du support de guidage 13, et plus particulièrement de l'excroissance mâle 20, selon la direction de rattrapage de jeu (ZZ'), pour éviter que, une fois le bouchon 1 en place dans le carter 3, et lors du fonctionnement du mécanisme 4, le chariot 12 ne vienne buter contre lesdits ergots 23.

Cependant, lesdits ergots 23 sont (également) suffisamment proches axialement du support de guidage 13, et plus particulièrement suffisamment proches de l'excroissance mâle 20, selon la direction de rattrapage de jeu (ZZ'), pour pouvoir bloquer la course du chariot 12 le long de la direction de rattrapage de jeu (ZZ') avant que ledit chariot 12 ne se déboîte totalement du support de guidage 13.

Ainsi, les ergots 23 forment des butées qui sont suffisamment proches de l'excroissance mâle pour maintenir le chariot 12 sur son rail de guidage, tant que le bouchon 1 ne se trouve pas encore dans le carter 3 et que le chariot 12 ne coopère pas encore avec le palier 15 et la vis sans fin 6.

De préférence, le ou les ergots 23 sont agencés de manière à retenir, lorsque le bouchon 1 se trouve hors du carter 3, le chariot 12 sur le support de guidage 13 à l'encontre de l'organe élastique 16 qui est au moins partiellement comprimé.

Ainsi, lorsque le bouchon 1 se trouve hors du carter 3, l'organe élastique 16 plaque élastiquement le chariot 12, et plus particulièrement la face avant 12F dudit chariot 12 destinée à être orientée vers la roue tangente 5, contre le ou les ergots 23, dans une position dite « avancée », qui correspond à une position éloignée du support de guidage 13 selon la direction de rattrapage de jeu (ZZ'), et proche (virtuellement) de la roue tangente 5.

Ce maintien élastique du chariot 12 contre les ergots 23 confère au sous-ensemble constituant le bouchon 1 une grande stabilité pendant son transport et sa manipulation hors du carter 3.

Lorsque l'on met en place le bouchon 1 dans le carter 3, et que l'on engage le chariot 12 contre le palier 15 et la vis sans fin 6, l'action du palier 15, qui est retenu transversalement à l'axe central (XX') par la vis sans fin 6 qui s'appuie elle-même contre la roue tangente 5, repousse le chariot 12 le long de la direction de rattrapage de jeu (ZZ'), à l'encontre de l'organe élastique 16, vers une position fonctionnelle dite « reculée » plus proche du support de guidage 13 et plus éloignée de la roue tangente 5 que la position avancée, en décollant ainsi la face avant 12F du chariot 12 des ergots 23 afin de ménager un jeu axial fonctionnel suffisant entre le chariot 12 et les ergots 23, le long de ladite direction de rattrapage de jeu (ZZ').

On notera par ailleurs que les ergots peuvent former des cliquets anti-retour autorisant l'insertion du chariot 12 sur l'organe de guidage 13 le long de la direction de rattrapage de jeu (ZZ'), dans un sens passant, mais s'opposant à la séparation du chariot 12 et de l'organe de guidage 13 dans un sens bloquant opposé.

En variante, ou en complément, le chariot 12, le support de guidage 13 et les ergots 23 pourront être dimensionnés de manière à permettre une insertion initiale du chariot 12 sur l'organe de guidage 13 par un accès légèrement en biais (c'est-à-dire en donnant au chariot 12 une légère inclinaison) par rapport à la direction de rattrapage de jeu (ZZ'), pour faciliter le franchissement des ergots 23, par glissement du chariot 12 par-dessus desdits ergots 23, dans le sens passant.

Par ailleurs, on notera que les deux ergots 23 sont de préférence espacés de manière à s'étendre de part et d'autre d'un intervalle de passage 24 situé dans le prolongement du trou de réception 22, selon la direction de rattrapage de jeu (ZZ'), du côté orienté vers la vis sans fin 6 et la roue tangente 5.

Ledit intervalle de passage 24 permet en effet de laisser le passage à un noyau de moulage engagé contre la face interne 10I du moyeu, selon la direction de rattrapage de jeu (ZZ'), pour former ledit trou de réception 22.

Selon une caractéristique préférentielle qui peut constituer une invention à part entière, le chariot 12 est formé, tel que cela est notamment visible sur les figures 1 et 2, par une portion d'un cylindre orienté selon l'axe central (XX'), et plus précisément centré sur l'axe central (XX') lorsque le chariot 12 se trouve en position nominale.

Ladite portion de cylindre comprend sur une face 12E, ici la face axialement externe orientée vers l'extérieur du carter 3 selon l'axe central (XX'), une rainure de guidage 21 destinée à coopérer avec le support de guidage 13 du moyeu pour retenir axialement le chariot sur le moyeu 10 tout en autorisant le coulissement du chariot 12 selon la direction de rattrapage de jeu (ZZ').

Ladite portion de cylindre comprend également, sur la face 12I axialement opposée, ici la face interne 12I orientée vers l'intérieur du carter 3 et la vis sans fin 6, un logement de palier 14 qui est agencé pour accommoder un palier 15, tel qu'un roulement à billes 15, destiné à soutenir et guider en rotation une vis sans fin 6 contenue dans le carter 3.

Le chariot 12 peut ainsi présenter une forme particulièrement compacte, en outre facile à obtenir par moulage.

La portion de cylindre formant le chariot 12 est de préférence tronquée, dans sa partie inférieure, radialement la plus proche de la zone d'engrènement entre la vis sans fin 6 et la roue tangente 5, par un méplat 25.

Ledit méplat 25 coïncide de préférence avec la face avant 12F du chariot destinée à venir en appui provisoire contre les ergots 23, avant la mise en place du bouchon 1 dans le carter 3.

Avantageusement, en tronquant la portion de cylindre formant le chariot 12, on allège le chariot 12 et on évite toute interférence dudit chariot 12 avec le mécanisme à engrenage 4.

Malgré tout, la couverture angulaire du logement de palier 14, autour de l'axe central (XX'), est strictement supérieure à 180 degrés, de sorte que le chariot occupe plus d'un demi-cylindre, de manière à retenir radialement le palier 15, ici dans une position coaxiale au chariot 12.

Avantageusement, le logement de palier 14 s'ouvre sur la face interne 12I du chariot 12, de telle manière que ledit chariot peut être directement engagé sur le palier 15, et venir ainsi couvrir ledit palier 15, lorsque l'on enfonce axialement le bouchon 1 portant ledit chariot 12 dans l'orifice 2 du carter 3.

De préférence, le pourtour (radialement externe) du chariot 12 est pourvu d'un patin amortisseur 26 en élastomère, de préférence de forme annulaire fendue, qui est destiné à coopérer avec la paroi interne de l'orifice 2 pour éviter ou atténuer les chocs du chariot 12 contre le carter 3.

Le patin amortisseur 26 est de préférence réalisé en poly(butadiène-acrylonitrile) hydrogéné, usuellement désigné par l'acronyme HNBR, ou bien en silicone.

De préférence, le patin amortisseur 26 est rapporté en surépaisseur radiale dans une gorge périphérique 28 prévue à cet effet sur le périmètre de la portion de cylindre formant le chariot 12.

Ledit patin amortisseur 26 est de préférence retenu par crochetage élastique au moyen de crochets terminaux 27 qui coopèrent avec des rebords correspondants du chariot 12, sensiblement au niveau du méplat 25.

Avantageusement, ce patin amortisseur 26 procure un appui latéral élastique complémentaire au chariot 12 contre le carter 3, ici de préférence à distance axiale des surfaces d'appui du chariot 12 contre le support de guidage 13, ce qui permet d'amortir et d'éviter les chocs entre le chariot 12 et le carter 3, et donc les bruits, notamment lors des inversions du sens de rotation de la vis sans fin 6 (qui surviennent typiquement lors des inversions de braquage du système de direction assistée).

Par ailleurs, le moyeu 10 est de préférence pourvu d'un joint d'étanchéité 30 destiné à assurer une jonction entre le moyeu 10 et la paroi de l'orifice 2 qui soit étanche au moins à l'eau liquide.

Ledit joint d'étanchéité 30 est de préférence réalisé en élastomère.

Il peut prendre de préférence la forme d'un joint torique 30.

En variante, on pourrait toutefois réaliser le joint d'étanchéité 30 sous forme d'une couche élastomère déposée solidairement, par exemple par surmoulage, sur le pourtour du moyeu 10.

Le bouchon 1, et plus particulièrement le joint d'étanchéité 30, est conçu pour assurer une étanchéité à l'eau liquide de ruissellement, sensiblement à la pression atmosphérique (environ 1 bar), mais également à des pressions plus élevées, allant par exemple jusqu'à 100 bar, afin de résister aux lavages par des nettoyeurs haute pression.

Le bouchon 1 assure également une étanchéité au lubrifiant, tel que graisse ou huile, utilisé par le mécanisme 4 et présent dans le carter 3, afin d'éviter toute perte de lubrifiant.

Par ailleurs, selon une variante préférentielle de réalisation, le bouchon 1, et plus particulièrement le moyeu 10, est de préférence formé en deux parties 10A, 10B emboîtées, accouplées l'une à l'autre selon un plan de joint normal à l'axe central (XX') et passant par le fond d'une gorge qui reçoit le joint torique 30, tel que cela est notamment illustré sur les figures 4 et 5.

Un tel agencement permet notamment d'éviter les défauts de raccordement, et donc d'étanchéité, à la surface de la gorge, et donc entre le joint torique 30 et la partie pleine du moyeu 10.

De préférence, lesdites parties 10A, 10B constitutives du moyeu 10 présenteront sensiblement la forme de disques, le premier disque 10A portant l'organe de retenue (collerette) 11, et le second disque 10B portant le support de guidage 13.

L'emboîtement peut être réalisé en prévoyant sur l'un des disques 10A, 10B une couronne 31, de préférence pourvue de protubérances radiales 32, destinée à être engagée, de manière serrée, dans une rainure circulaire 33 creusée dans l'autre disque 10B, 10A.

Ainsi, l'invention peut également porter en tant que telle sur un élément de bouchon 10B, ici un disque 10B, destiné à entrer dans la constitution d'un bouchon 1 de carter 3, ledit élément de bouchon 10B comprenant un moyeu 10 (plein), de préférence en matériau thermoplastique, d'axe central (XX'), sur une face 10I duquel est formé, d'un seul tenant avec le moyeu 10, un support de guidage 13 saillant qui forme un rail de guidage à section en crochet, par exemple en « T » ou en queue d'aronde, destiné à retenir et guider un chariot 12, et orienté selon une direction dite « direction de rattrapage de jeu » (ZZ') transverse à l'axe central (XX'), ledit support de guidage 13 étant également porteur d'un organe d'orientation 17, tel qu'une nervure axiale 17, permettant de définir l'orientation azimutale de ladite direction de rattrapage de jeu (ZZ') par rapport à l'axe central (XX').

Un tel élément de bouchon 10B est destiné à être fixé, de préférence par emboîtement, à un autre élément de bouchon 10A de forme complémentaire, pour reconstituer le moyeu 10 du bouchon 1.

Le ressort 16 est alors mis en place dans le trou de réception 22, et le chariot 12 enfilé radialement sur le support de guidage 13, à l'encontre du ressort 16, et maintenu provisoirement en place par le ou les ergots 23.

L'ensemble ainsi formé peut alors être rapporté sur le carter 3, enfilé axialement dans l'orifice 2 dudit carter 3 de manière à engager le palier 15 dans le logement de palier 14 du chariot, et à verrouiller le moyeu 10 dans le carter, par encliquetage de la collerette 11 dans la paroi de l'orifice 2.

Bien entendu, l'invention porte sur tout dispositif comprenant un carter 3 protégeant un mécanisme 4 à engrenage et obturé par un bouchon 1 selon l'invention.

Ainsi, en particulier, l'invention concerne un réducteur comprenant un mécanisme 4 à roue tangente 5 et vis sans fin 6 logé dans un carter 3 obturé par un bouchon 1 selon l'invention, dont le moyeu 10 est coaxial à l'axe de rotation de la vis sans fin 6, et dont le chariot 12 de rattrapage de jeu est agencé pour presser ladite vis sans fin 6 contre la roue tangente 5.

L'invention concerne bien entendu un système de direction assistée comprenant un carter de direction 3, et plus particulièrement un carter 3 de réducteur 4, notamment un carter 3 de réducteur 4 à roue tangente 5 et vis sans fin 6, obturé par au moins un bouchon 1 selon l'invention, ainsi qu'un véhicule équipé d'un tel système de direction assistée.

Bien entendu, l'invention n'est nullement limitée aux seules variantes de réalisation susmentionnées, l'homme du métier étant notamment à même d'isoler ou de combiner librement entre elles l'une ou l'autre des caractéristiques décrites dans ce qui précède ou de lui substituer un équivalent.

## Revendications

1. Bouchon (1) destiné à fermer un orifice (2) d'un carter (3), ledit bouchon (1) comprenant un moyeu plein (10), d'axe central (XX'), qui peut être agencé pour obstruer l'orifice (2) du carter, ainsi qu'un organe de retenue (11) solidaire du moyeu (10) et qui peut être agencé pour coopérer avec le carter (3) afin d'assurer la fixation axiale du bouchon (1) dans l'orifice (2) du carter, ledit bouchon étant **caractérisé en ce qu'**il comporte :
- un chariot (12) de rattrapage de jeu, qui est distinct du moyeu (10) et qui est monté mobile sur un support de guidage (13) porté par le moyeu (10), ledit support de guidage (13) étant agencé de manière à retenir axialement ledit chariot (12) et à guider le déplacement relatif dudit chariot (12) par rapport au moyeu (10) selon une direction dite « direction de rattrapage de jeu » (ZZ') transverse à l'axe central (XX'),
- un organe élastique (16), de type ressort, interposé entre le support de guidage (13) et le chariot (12) de manière à contraindre élastiquement ledit chariot (12) en déplacement selon la direction de rattrapage de jeu (ZZ'),
- un organe d'orientation (17) qui peut être agencé pour pouvoir coopérer avec un organe d'orientation conjugué (18) prévu dans le carter (3), de manière à orienter le bouchon (1), et par conséquent la direction de rattrapage de jeu (ZZ') définie par le support de guidage (13), en azimut autour de l'axe central (XX'), selon une orientation prédéterminée par rapport au carter (3).

2. Bouchon selon la revendication 1 **caractérisé en ce que** le support de guidage (13) est formé d'un seul tenant, de préférence par moulage, avec le moyeu (10).

3. Bouchon selon la revendication 1 ou 2 **caractérisé en ce que** le support de guidage (13) forme une excroissance mâle (20) qui fait saillie axialement sur une face du moyeu dite « face interne » (10I) formant une base dudit moyeu (10) destinée à être orientée axialement vers l'intérieur du carter (3), ladite excroissance mâle (20) présentant, en section droite normale à la direction de rattrapage de jeu (ZZ'), une forme de crochet, de préférence en queue d'aronde ou en « T », qui coopère avec une rainure femelle (21) de forme conjuguée creusée dans le chariot (12) pour guider le chariot (12) en translation selon la direction de rattrapage de jeu (ZZ').

4. Bouchon selon l'une des revendications 1 à 3 **caractérisé en ce que** l'organe d'orientation (17) est formé d'un seul tenant avec le moyeu (10) et/ou d'un seul tenant avec le support guidage (13), de préférence sous forme d'une nervure axiale.

5. Bouchon selon l'une des revendications précédentes **caractérisé en ce que** le support de guidage (13) présente un trou de réception (22) percé selon la direction de rattrapage de jeu (ZZ') pour accueillir l'organe élastique (16), ce dernier étant de préférence formé par un ressort hélicoïdal.

6. Bouchon selon l'une des revendications précédentes **caractérisé en ce que** le moyeu (10) présente une face interne (10I), destinée à être orientable axialement vers l'intérieur du carter (3), et située en vis-à-vis du chariot (12), et **en ce que** ladite face interne (10I) est pourvue d'au moins un ergot (23), et de préférence deux ergots (23), destinés à retenir le chariot (12) sur le support de guidage (13), afin d'empêcher un déboîtement accidentel du chariot (12) hors du support de guidage (13) selon la direction de rattrapage de jeu (ZZ') lors de la manipulation du bouchon (1) hors du carter (3) et lors du montage du bouchon sur le carter (3).

7. Bouchon selon l'une des revendications précédentes **caractérisé en ce que** le chariot (12) est formé par une portion d'un cylindre orienté selon l'axe central (XX') et qui comprend sur une face (12E) une rainure de guidage (21) destinée à coopérer avec le support de guidage (13) du moyeu (10) pour retenir axialement le chariot (12) sur le moyeu (10) tout en autorisant le coulissement du chariot (12) selon la direction de rattrapage de jeu (ZZ'), et qui comprend, sur la face axialement opposée (12I), un logement de palier (14) agencé pour accommoder un palier (15), tel qu'un roulement à billes, destiné à soutenir et guider en rotation une vis sans fin (6) contenue dans le carter (3).

8. Bouchon selon l'une des revendications précédentes **caractérisé en ce que** le pourtour du chariot (12) est pourvu d'un patin amortisseur (26) en élastomère, de préférence de forme annulaire fendue, destiné à coopérer avec la paroi interne de l'orifice (2) pour éviter ou atténuer les chocs du chariot (12) contre le carter (3).

9. Bouchon selon l'une des revendications précédentes **caractérisé en ce que** le moyeu (10) est pourvu d'un joint d'étanchéité (30), de préférence un joint torique, destiné à assurer une jonction entre le moyeu (10) et la paroi de l'orifice (2) qui soit étanche au moins à l'eau liquide.

10. Bouchon selon l'une des revendications 1 à 9 comprenant un élément de bouchon (10B) destiné à entrer dans la constitution du bouchon (1) de carter (3), ledit élément de bouchon comprenant un moyeu (10), de préférence en matériau thermoplastique, d'axe central (XX'), sur une face (10I) duquel est formé, d'un seul tenant avec le moyeu (10), un support de guidage (13) saillant qui forme un rail de guidage à section en crochet, par exemple en « T » ou en queue d'aronde, destiné à retenir et guider un chariot (12), et orienté selon une direction dite « direction de rattrapage de jeu » (ZZ') transverse à l'axe central (XX'), ledit support de guidage (13) étant également porteur d'un organe d'orientation (17), tel qu'une nervure axiale, permettant de définir l'orientation azimutale de ladite direction de rattrapage de jeu par rapport à l'axe central (XX').

11. Réducteur comprenant un mécanisme (4) à roue tangente (5) et vis sans fin (6) logé dans un carter (3) obturé par un bouchon (1) selon l'une des revendications 1 à 9, dont le moyeu (10) est coaxial à l'axe de rotation de la vis sans fin (6), et dont le chariot (12) de rattrapage de jeu est agencé pour presser ladite vis sans fin (6) contre la roue tangente (5).

## Patentansprüche

1. Stopfen (1), der dazu bestimmt ist, eine Öffnung (2) eines Gehäuses (3) zu schließen, wobei der Stopfen (1) eine volle Nabe (10) mit einer Mittenachse (XX') umfasst, die angeordnet sein kann, um die Öffnung (2) des Gehäuses zu verstopfen, sowie ein fest mit der Nabe (10) verbundenes Halteorgan (11), und das angeordnet werden kann, um mit dem Gehäuse (3) zusammenzuwirken, um für die axiale Befestigung des Stopfens (1) in der Öffnung (2) des Gehäuses zu sorgen, wobei der Stopfen **dadurch gekennzeichnet ist, dass** er Folgendes beinhaltet:
- einen Schlitten (12) zum Ausgleichen eines Spiels, der sich von der Nabe (10) unterscheidet, und der beweglich auf einer Führungsstütze (13) montiert ist, die von der Nabe (10) getragen wird, wobei die Führungsstütze (13) derart angeordnet ist, um den Schlitten (12) axial zu halten, und um die relative Verschiebung des Schlittens (12) in Bezug auf die Nabe (10) in einer "Spielausgleichsrichtung" (ZZ') genannten Richtung quer zur Mittenachse (XX') zu führen,
- ein elastisches Organ (16), in der Art einer Feder, das zwischen der Führungsstütze (13) und dem Schlitten (12) eingesetzt ist, um den Schlitten (12) bei der Verschiebung in der Spielausgleichsrichtung (ZZ') elastisch vorzuspannen,
- ein Ausrichtungsorgan (17), das angeordnet werden kann, um mit einem gemeinsamen Ausrichtungsorgan (18), das in dem Gehäuse (3) vorgesehen ist, zusammenwirken zu können, um den Stopfen (1), und somit die durch die Führungsstütze (13) definierte Spielausgleichsrichtung (ZZ') in Azimut um die Mittenachse (XX') herum in einer in Bezug auf das Gehäuse (3) vorbestimmten Ausrichtung auszurichten.

2. Stopfen nach Anspruch 1, **dadurch gekennzeichnet, dass** die Führungsstütze (13), vorzugsweise durch Gießen, aus einem Stück mit der Nabe (10) gebildet ist.

3. Stopfen nach Anspruch 1 oder 2, **dadurch gekennzeichnet, dass** die Führungsstütze (13) einen Steckauswuchs (20) bildet, der axial auf einer Seite der Nabe, "Innenseite" (10I) genannt, hervorsteht, die eine Basis der Nabe (10) bildet, die dazu bestimmt ist, axial ins Innere des Gehäuses (3) ausgerichtet zu werden, wobei der Steckauswuchs (20) im geraden Schnitt normal zur Spielausgleichsrichtung (ZZ') eine Hakenform, vorzugsweise als Schwalbenschwanz oder als "T" aufweist, die mit einer Innennut (21) in einer gemeinsamen, in den Schlitten (12) gegrabenen Form zusammenwirkt, um den Schlitten (12) in Translation in der Spielausgleichsrichtung (ZZ') zu führen.

4. Stopfen nach einem der Ansprüche 1 bis 3, **dadurch gekennzeichnet, dass** das Ausrichtungsorgan (17) in einem Stück mit der Nabe (10) und/oder in einem Stück mit der Führungsstütze (13), vorzugsweise in Form einer axialen Rippe gebildet ist.

5. Stopfen nach einem der vorstehenden Ansprüche, **dadurch gekennzeichnet, dass** die Führungsstütze (13) ein Aufnahmeloch (22) aufweist, das in der Spielausgleichsrichtung (ZZ') gebohrt ist, um das elastische Organ (16) aufzunehmen, wobei dieses Letztere vorzugsweise durch eine Spiralfeder gebildet ist.

6. Stopfen nach einem der vorstehenden Ansprüche, **dadurch gekennzeichnet, dass** die Nabe (10) eine Innenseite (10I) aufweist, die dazu bestimmt ist, axial ins Innere des Gehäuses (3) ausrichtbar zu sein, und sich gegenüber dem Schlitten (12) befindet, und dadurch, dass die Innenseite (10I) mit mindestens einer Nase (23), und vorzugsweise mit zwei Nasen (23) versehen ist, die dazu bestimmt sind, den Schlitten (12) auf der Führungsstütze (13) zu halten, um ein unabsichtliches Ausschwenken des Schlittens (12) aus der Führungsstütze (13) in der Spielausgleichsrichtung (ZZ') bei der Handhabung des Stopfens (1) aus dem Gehäuse (3) heraus, und bei der Montage des Stopfens auf dem Gehäuse (3) zu verhindern.

7. Stopfen nach einem der vorstehenden Ansprüche, **dadurch gekennzeichnet, dass** der Schlitten (12) durch einen Abschnitt eines Zylinders gebildet wird, der entlang der Mittenachse (XX') ausgerichtet ist und der auf einer Seite (12E) eine Führungsnut (21) umfasst, die dazu bestimmt ist, mit der Führungsstütze (13) der Nabe (10) zusammenzuwirken, um den Schlitten (12) axial auf der Nabe (10) zu halten, und dabei das Gleiten des Schlittens (12) in der Spielausgleichsrichtung (ZZ') zu erlauben, und der auf der axial gegenüberliegenden Seite (12I) eine Lageraufnahme (14) umfasst, die angeordnet ist, um ein Lager (15), wie ein Kugellager, aufzunehmen, das dazu bestimmt ist, ein Schneckengetriebe (6), das in dem Gehäuse (3) enthalten ist, drehend zu stützen und zu führen.

8. Stopfen nach einem der vorstehenden Ansprüche, **dadurch gekennzeichnet, dass** der Umfang des Schlittens (12) mit einer Dämpferkufe (26) aus Elastomer, vorzugsweise in einer geschlitzten kreisrunden Form versehen ist, dazu bestimmt, mit der Innenwand der Öffnung (2) zusammenzuwirken, um die Stöße des Schlittens (12) gegen das Gehäuse (3) zu vermeiden oder abzuschwächen.

9. Stopfen nach einem der vorstehenden Ansprüche, **dadurch gekennzeichnet, dass** die Nabe (10) mit einer Dichtung (30), vorzugsweise einem O-Ring, versehen ist, die dazu bestimmt ist, für eine Verbindung zwischen der Nabe (10) und der Wand der Öffnung (2) zu sorgen, die mindestens gegen flüssiges Wasser dicht sein sollte.

10. Stopfen nach einem der Ansprüche 1 bis 9, ein Stopfenelement (10B) umfassend, das dazu bestimmt ist, in den Aufbau des Stopfens (1) eines Gehäuses (3) einbezogen zu werden, wobei das Stopfenelement eine Nabe (10), vorzugsweise aus thermoplastischem Material, mit einer Mittenachse (XX') umfasst, auf deren einen Seite (10I), in einem Stück mit der Nabe (10), eine hervorstehende Führungsstütze (13) gebildet ist, die eine Führungsschiene mit Hakenschnitt, beispielsweise als "T" oder Schwalbenschwanz bildet, die dazu bestimmt ist, den Schlitten (12) zu halten und zu führen, und in einer "Spielausgleichsrichtung" (ZZ') genannten Richtung quer zur Mittenachse (XX') ausgerichtet ist, wobei die Führungsstütze (13) auch Träger eines Ausrichtungsorgans (17), wie einer axialen Rippe, ist, das es ermöglicht, die Azimut-Ausrichtung der Spielausgleichsrichtung in Bezug auf die Mittenachse (XX') zu definieren.

11. Getriebe, umfassend einen Mechanismus (4) mit Schneckenrad (5) und Schneckengetriebe (6), das in einem Gehäuse (3) aufgenommen ist, das durch einen Stopfen (1) nach einem der Ansprüche 1 bis 9 verstopft ist, dessen Nabe (10) koaxial zur Drehachse des Schneckengetriebes (6) ist, und dessen Schlitten (12) zum Auffangen von Spiel angeordnet ist, um das Schneckengetriebe (6) an das Schneckenrad (5) zu drücken.

## Claims

1. A plug (1) intended to close an orifice (2) of a casing (3), said plug (1) comprising a solid hub (10), with a central axis (XX'), which can be arranged to obstruct the orifice (2) of the casing, as well as a retaining member (11) secured to with the hub (10) and which can be arranged to cooperate with the casing (3) in order to ensure the axial fastening of the plug (1) in the orifice (2) of the casing, said plug being **characterized in that** it includes:
- a play compensation carriage (12), which is distinct from the hub (10) and which is movably mounted on a guide support (13) carried by the hub (10), said guide support (13) being arranged so as to axially retain said carriage (12) and guide the relative displacement of said carriage (12) relative to the hub (10) in a direction called « play compensation » direction (ZZ') which is transverse to the central axis (XX'),
- an elastic member (16), of the spring type, interposed between the guide support (13) and the carriage (12) so as to elastically constrain said carriage (12) in displacement in the play compensation direction (ZZ'),
- an orientation member (17) which can be arranged to be able to cooperate with a conjugate orientation member (18) provided in the casing (3), so as to orient the plug (1), and consequently the play compensation direction (ZZ') defined by the guide support (13), in azimuth about the central axis (XX'), according to a predetermined orientation relative to the casing (3).

2. The plug according to claim 1, **characterized in that** the guide support (13) is formed in one piece, preferably by molding, with the hub (10).

3. The plug according to claim 1 or 2, **characterized in that** the guide support (13) forms a male protuberance (20) which protrudes axially on a face of the hub called « inner face » (101) forming a base of said hub (10) intended to be oriented axially inwardly of the casing (3), said male protuberance (20) having, in cross-section normal to the play compensation direction (ZZ'), a hook shape, preferably dovetail or «T»-shape, which cooperates with a female slot (21) of a conjugated shape hollowed out in the carriage (12) to guide the carriage (12) in translation in the play compensation direction (ZZ').

4. The plug according to any of claims 1 to 3, **characterized in that** the orientation member (17) is formed in one piece with the hub (10) and/or of in one piece with the guide support (13), preferably in the form of an axial rib.

5. The plug according to any of the preceding claims, **characterized in that** the guide support (13) has a receiving hole (22) drilled according to the play compensation direction (ZZ') to accommodate the elastic member (16), the latter preferably being formed by a helical spring.

6. The plug according to any of the preceding claims, **characterized in that** the hub (10) has an inner face (101), intended to be orientable axially inwardly of the casing (3), and located opposite to the carriage (12), and **in that** said inner face (101) is provided with at least one lug (23), and preferably two lugs (23), intended to retain the carriage (12) on the guide support (13), in order to prevent an accidental disengagement of the carriage (12) out of the guide support (13) in the play compensation direction (ZZ') during the manipulation of the plug (1) out of the casing (3) and during the mounting of the plug on the casing (3).

7. The plug according to any of the preceding claims, **characterized in that** the carriage (12) is formed by a portion of a cylinder which is oriented along the central axis (XX') and which comprises, on a face (12E), a guide slot (21) intended to cooperate with the guide support (13) of the hub (10) to axially retain the carriage (12) on the hub (10) while enabling the sliding of the carriage (12) in the play compensation direction (ZZ'), and which comprises, on the axially opposite face (121), a bearing housing (14) arranged to accommodate a bearing (15), such as a ball bearing, intended to support and guide in rotation a worm screw (6) contained in the casing (3).

8. The plug according to any of the preceding claims, **characterized in that** the periphery of the carriage (12) is provided with an elastomeric damping pad (26), preferably of a split ring shape, intended to cooperate with the inner wall of the orifice (2) to avoid or attenuate the impacts of the carriage (12) against the casing (3).

9. The plug according to any of the preceding claims, **characterized in that** the hub (10) is provided with a seal (30), preferably an O-ring, intended to ensure a junction between the hub (10) and the wall of the orifice (2) that is at least liquid water proof.

10. The plug according to any of claims 1 to 9, comprising a plug element (10B) intended to enter into the constitution of the plug (1) of casing (3), said plug element comprising a hub (10), preferably made of thermoplastic material, with a central axis (XX'), on a face (101) of which is formed, in one piece with the hub (10), a protruding guide support (13) which forms a guide rail with a hook section, for example dovetail or «T»-shaped section, intended to retain and guide a carriage (12), and oriented in a direction called « play compensation direction » (ZZ') which is transverse to the central axis (XX'), said guide support (13) also carrying an orientation member (17), such as an axial rib, allowing defining the azimuth orientation of said play compensation direction relative to the central axis (XX').

11. A reducer comprising a mechanism (4) with a worm wheel (5) and worm screw (6) housed in a casing (3) sealed by a plug (1) according to any of claims 1 to 9, whose hub (10) is coaxial with the axis of rotation of the worm screw (6), and whose play compensation carriage (12) is arranged to press said worm screw (6) against the worm wheel (5).
